# EUROPÄISCHE PATENTSCHRIFT

(11) **EP 0 433 221 B1**
(45) Veröffentlichungstag und Bekanntmachung des Hinweises auf die Patenterteilung: **28.07.1993**
(21) Anmeldenummer: 90810884.8
(22) Anmeldetag: 19.11.1990
(51) Int. Cl.: B01J 20/00, A01K 1/015

(54) **Verfahren zur Herstellung eines saugfähigen Produktes aus Papier sowie Streu für Tiere und Oelbindemittel hergestellt nach dem Verfahren**
Process for preparation of an adsorbent paper product such as animal bedding and oil adsorbent product prepared by the process
Procédé de préparation d'un produit adsorbant en papier ainsi que litière pour animaux et produit adsorbant l'huile préparés par ce procédé

(30) Priorität: 09.12.1989 CH 4427/89
(43) Veröffentlichungstag der Anmeldung: 19.06.1991
(73) Patentinhaber: Keller, Fritz, CH-8606 Nänikon-Greifensee (CH)
(72) Erfinder: Keller, Fritz, CH-8606 Nänikon-Greifensee (CH); Müllhaupt, Elisabeth, CH-8624 Grüt/Gossau (CH)
(74) Vertreter: Gachnang, Hans Rudolf

(56) Entgegenhaltungen:
- EP-A- 0 121 055
- FR-A- 2 618 641
- NL-A- 8 304 094
- US-A- 4 263 873
- US-A- 4 409 925
- US-A- 4 560 527

## Beschreibung

Gegenstand der vorliegenden Erfindung ist ein Verfahren zur Herstellung eines saugfähigen Produktes aus Papier. Im weiteren betrifft diese Erfindung Streu für Tiere und Oelbindemittel hergestellt nach dem Verfahren.

Als Grundstoff der vorliegenden Erfindung wird Recycling-Papier verwendet, welches aus Haushaltsammlungen (Zeitschriften, Kartons und Zeitungen) kommt oder von Papier-Recycling-Betrieben angeboten wird.

In verschiedenen Bereichen des täglichen Lebens werden Stoffe verwendet, mit welchen Flüssigkeiten aufgesaugt und gebunden werden. Als saugendes Material werden häufig organische Stoffe (z.B. Holzspäne, Textilien, Papier, usw.) oder anorganische, mineralische Stoffe (z.B. Tonerde, Kalkstein, Montimorilonit, usw.) verwendet. Der Gebrauch von mineralischen Stoffen, z.B. zum Binden von Oel oder als Streu für Kleintiere, stellt eine heute nicht mehr verantwortbare Verschwendung von wertvollen Rohstoffen dar, weil die gesättigten Stoffe nach Gebrauch nur deponiert oder der Verbrennung zugeführt werden können und dort einen unverhältnismässigen Schlacke-Anfall hervorrufen.

Zur Herstellung von Streu für Kleintiere, wie Katzen, Kaninchen, Hamster, usw., die häufig ausschliesslich in Wohnungen gehalten werden, ist es bekannt, granulierte oder pelletierte Streumittel zu verwenden, die aus Altpapier hergestellt werden. Dabei wird das Altpapier, das meist aus papierverarbeitenden Betrieben stammt und nicht oder nur wenig durch Druckfarbe verunreinigt ist, verwendet und entweder mit einem Schlagwerkzeug zerkleinert oder in einer Mühle gemahlen und unter Zugabe von Wasser zu Pellets, Granulat oder Rubbel verpresst. Auf diese Weise hergestelltes Streumittel hat den Nachteil, dass es durch die Wasseraufnahme aus dem Urin der Tiere zerfällt und zu Brei wird. Es ist deshalb auch schon vorgeschlagen worden, dem zerkleinerten Grundstoff Bindemittel (Leim) zuzusetzen. Die Zugabe von Bindemitteln verteuert das Endprodukt und kann die Umwelt belastende Stoffe enthalten, welche bei der Entsorgung frei werden. Im weiteren verringern die bekannten Bindemittel die Saugfähigkeit des Endproduktes.

Aus der NL-A-8 304 094 ist ein solches Verfahren zur Herstellung von Katzenstreu aus Zeitungen bekannt.

Aus der US-A-4 409 925 ist weiter ein Verfahren zur Herstellung von absorbierendem Material aus Papierabfällen bekannt. Die verkleinerten Papierteilchen werden dort zu einem feinen Brei verarbeitet und mit einem Bindemittel versetzt, um einen Verbund, des in faserige Form zerlegten Grundstoffes, zu ermöglichen. Bei Verwendung solcher geklebter Fasern als Katzenstreu ergibt sich bei dessen Benetzung durch Urin eine klebrige Masse, die an den Pfoten der Tiere kleben bleibt.

Hier schlägt die Erfindung ein anderes Vorgehen vor.
Die Erfindung, wie sie in den Ansprüchen gekennzeichnet ist, löst die Aufgabe, ein Verfahren zu schaffen, bei welchem aus dem Grundstoff Altpapier ein Granulat hergestellt wird, welches eine hohe spezifische Saugfähigkeit aufweist und auch in nassem Zustand nicht zu einem Brei zerfällt und auch nach dem Aufquellen als Körper erhalten bleibt.

Wird das erfindungsgemässe Produkt als Tierstreu verwendet, kann es umweltgerecht entsorgt werden, indem es entweder kompostiert, mit dem Müll unter Abgabe von Energie verbrannt oder der Kanalisation zugeführt wird. Das Papier sowie die durch das Tier eingebrachten Exkremente sind biologisch abbaubar. Im Gegensatz zu mineralischen Produkten entstehen keine sich erhärtende Sedimente, die vor allem in der Kanalisation ein grosses Problem darstellen. Zudem kann in der Kläranlage beim biologischen Abbau Biogas-Energie gewonnen werden, und es entstehen auch keine mineralischen Sedimente im Klärschlamm. Dieser wird dadurch reduziert.

Durch die Art der mechanischen Bearbeitung und die Form sowie Oberflächenbeschaffenheit des Granulats oder der Pellets wird ein Klebenbleiben an der Behaarung des Tieres und eine Staubabgabe verhindert. Im weiteren ist der Verbrauch des Produktes infolge der hohen spezifischen Saugfähigkeit gering.

Bei der Verwendung des Produktes als Oelbindemittel wird das ölgesättigte Produkt der Müllverbrennung zugeführt, wo es unter Abgabe von Energie verbrannt wird und keinen zusätzlichen Schlacke-Anfall verursacht, oder es wird mit speziellen biologischen Abbausystemen entsorgt. Eine Deponierung wäre denkbar, wird jedoch in Zukunft keine Lösung der Entsorgung darstellen.
Als Oelbindemittel eingesetzt, bleibt das Produkt schwimmfähig und ist in der Lage, auf der Wasseroberfläche schwimmend, ölartige Produkte weitgehend aufzusaugen, ohne dabei zu versinken.

Anhand von Beispielen wird das erfindungsgemässe Verfahren näher erläutert.

### Beispiel 1 (Herstellung von Streu für Tiere)

Der Grundstoff wird mit Messern geschnitten, d.h. die einzelnen Papierbögen werden in unregelmässige oder streifenförmige, z.B. 2-3 cm grosse und 2-5 cm lange Streifen-Abschnitte zerschnitten. Danach werden die Papierfetzen oder Abschnitte in geeigneter Weise zerknittert, zerknüllt und ineinander verhakt derart, dass Hohlkammern (Kavernen) entstehen. Die Durchmischung und Verhakung kann durch Verwirbeln im Luftstrom und/oder durch Kneten erfolgen. Daraus resultiert eine Volumenvergrösserung im Verhältnis von ca. 1:50 zum Ausgangszustand. Im nächsten Produktionsschritt wird die Masse in geeigneter Weise in einer Flachbett- oder Ringmatrizenpresse zusammengepresst, so dass beispielsweise zylindrische, ca. 10 mm im Durchmesser aufweisende Körper (Vor-Presslinge) entstehen. Diese werden anschliessend bis auf die gewünschte Grösse in geeigneter Weise, z.B. in einer Ringmatrizenpresse, verpresst, wobei die Lochgrössen im Bereich von 1-10 mm, vorzugsweise 3-6 mm, liegen. Dies kann, falls notwendig, unter minimaler Zugabe von bis zu 10% Wasser geschehen. Selbstverständlich ist es möglich, dem Papier diverse Zusätze beizufügen, welche die Saugfähigkeit zusätzlich erhöhen. Es ist auch möglich, falls erwünscht, dem Produkt eine desodorierend oder desinfizierend wirkende Substanz auf natürlicher oder künstlicher Basis beizugeben. Als Duftstoffe können natürliche oder synthetische Essenzen, Parfümöle, etc., als geruchsbildende Zusätze Chlorophyll, Aktivkohle, Zink-Ricinoleate, Enzyme etc., als Desinfektionsmittel reduzierend oder oxidierend wirkende Verbindungen, kationische Tenside, Amphotenside, Alkohole etc., und als die Benetzbarkeit beeinflussende Stolle, z.B. anionische und nichtionische Tenside, Poly- oder Oligomere verwendet werden.
Das auf diese Weise hergestellte Streu kann nun verpackt und seiner Bestimmung zugeführt werden.

### Beispiel 2 (Herstellung von Oel-Bindemittel)

Das Verfahren zur Herstellung des Granulats bzw. der Pellets erfolgt wie im Beispiel 1 beschrieben. Anstelle von Zusätzen, die die Saugfähigkeit gegenüber Wasser erhöhen, werden solche zugesetzt, die hydrophobe und/oder lipophile Eigenschaften besitzen. Auf diese Weise bleibt die hohe Saugfähigkeit des Granulats erhalten, jedoch nicht mehr bezüglich des Wassers, sondern ausschliesslich bezüglich des Oels.
Es ist auch möglich, dem Granulat weitere Zusätze beizufügen, die z.B. die spezifische Dichte verkleinern und somit die Fähigkeit, auf Wasser zu schwimmen, erhöhen. Zur Auftriebserhöhung können Holz, Mikroglasperlen oder Kunststoffschäume (Styropor- oder Polyurethanschaum) verwendet werden.

In einer weiteren Ausgestaltung der Erfindung wird vorgeschlagen, die Pellets mit einem Überzug aus Bentonit, Kreide, etc., zu versehen. Mit dem Überzug, bzw. dessen Zusammensetzung, kann eine Vergrösserung der Oberfläche erreicht werden, die die Eigenschaften je nach Anwendungsbereich verbessert. Solche Eigenschaften sind nebst erhöhter Saugfähigkeit durch schnellere Aufnahme der Feuchtigkeit, Farbgebung, damit das Produkt der natürlichen Umgebung (Bodenbeschaffenheit) ähnlich sieht, und die Akzeptanz erhöht. In den Überzug eingebaute Aktivstoffe, z.B. Geruchsbinder, können auf diese Weise dem Produkt beigegeben werden, ohne dessen Eigenschaften bezüglich Saugfähigkeit zu verschlechtern.

Dem erfindungsgemässen Produkt oder dem Überzug können auch Zusätze beigegeben werden, welche magnetische oder elektrostatische Eigenschaften aufweisen und eine spätere Aussortierung, von z.B. mit Oel gesättigten Pellets, erlauben.

## Patentansprüche

1. Verfahren zur Herstellung von saugfähigem Granulat, Klötzchen oder Pellets aus Papier, gekennzeichnet durch folgende Verfahrensschritte:
a) mechanisches Zerkleinern des Papiers in unregelmässige oder streifenförmige Abschnitte,
b) Zerknüllen der Papierschnitzel zur Bildung von Hohlkammern und Durchmischen der zerknüllten Papierschnitzel,
c) Zusammenpressen der zerknüllten und beim Durchmischen miteinander verhakten Papierschnitzel zu Vor-Presslingen,
d) Verpressen oder Zerkleinern der Vor-Presslinge zu Granulat, Klötzchen oder Pellets.

2. Verfahren nach Anspruch 1, dadurch gekennzeichnet, dass das Papier mittels Messern zerschnitten wird.

3. Verfahren nach einem der Ansprüche 1 und 2, dadurch gekennzeichnet, dass die Zerknüllung und Verhakung der Papierschnitzel durch Verwirbeln in einem Luftstrom und/oder durch Kneten erreicht wird.

4. Verfahren nach einem der Ansprüche 1 bis 3, dadurch gekennzeichnet, dass die Vor-Presslinge einen Durchmesser von 10 mm aufweisen.

5. Verfahren nach einem der Ansprüche 1 bis 4, dadurch gekennzeichnet, dass das Weiterverarbeiten der Vor-Presslinge zum Endprodukt durch eine Matrize erfolgt, deren Lochgrösse zwischen 1-10 mm, vorzugsweise 3-6 mm liegt.

6. Verfahren nach einem der Ansprüche 1 bis 5, dadurch gekennzeichnet, dass den Papierschnitzeln, den Vor-Presslingen oder den Pellets Zusätze beigefügt werden.

7. Verfahren nach einem der Ansprüche 1 bis 6, dadurch gekennzeichnet, dass das Granulat oder die Klötzchen oder Pellets mit einem Überzug versehen werden, der Zusätze enthält, welche die Eigenschaften der Pellets verändern.

8. Verfahren nach einem der Ansprüche 1 bis 7, dadurch gekennzeichnet, dass für die Verwendung des Produktes als Oelbindemittel Zusätze, die die spezifische Dichte erniedrigen, wie z.B. poröse Füllstoffe, Styropor- oder Polyurethanschaum in diversen Formen, Mikroglasperlen, Holz oder Stoffe, die die magnetischen oder elektrostatischen Eigenschaften der Papierfasern verändern, beigefügt werden.

9. Verfahren nach einem der Ansprüche 1 bis 8, dadurch gekennzeichnet, dass als Zusätze
- Duftstoffe, wie natürliche und synthetische Essenzen, Parfümöle
- geruchsbindende Zusätze, wie Chlorophyll, Aktiv-Kohle, Zink Ricinoleate, Enzime,
- Desinfektionsmittel, wie reduzierend oder oxidierend wirkende Verbindungen, kationische Tenside, Amphotenside, Alkohole,
- die Benetzbarkeit der Papierfasern beeiflussende Stoffe, d.h. anionische und nichtionische Tenside, Poly- oder Oligomere oder
- Bentonit, Kreide, zur Vergrösserung und/oder Verschönerung der Oberfläche,
verwendet werden.

10. Verfahren nach einem der Ansprüche 1 bis 9, dadurch gekennzeichnet, dass die Vorpressung der zerknüllten und verhakten Papierschnitzel in einer Flachbett-Presse erfolgt.

11. Verfahren nach Anspruch 1 bis 10, dadurch gekennzeichnet, dass die Verpressung der Vor-Presslingen zu Pellets in einer Ringmatrizen-Presse erfolgt.

12. Verfahren nach Anspruch 11, dadurch gekennzeichnet, dass die Herstellung unter Beigabe einer geringen Wassermenge von 0 bis 20% bezogen auf die Grundmasse erfolgt.

13. Streu für Tiere hergestellt nach dem Verfahren nach einem der Ansprüche 1 bis 12.

14. Oelbindemittel hergestellt nach dem Verfahren nach einem der Ansprüche 1 bis 8 und 10 bis 12.

## Claims

1. Method of producing absorbent granulated material, small blocks or pellets from paper, characterised by the following method steps:
a) mechanically shredding the paper into irregular or strip-like portions,
b) crushing the shreds of paper to form hollow chambers and intermixing the crushed shreds of paper,
c) compressing the crushed shreds of paper, which interlock with one another during the intermixing process, to form rough-pressed blanks,
d) pressing or comminuting the rough-pressed blanks to form granulated material, small blocks or pellets.

2. Method according to claim 1, characterised in that the paper is shredded by means of cutters.

3. Method according to one of claims 1 and 2, characterised in that the crushing and interlocking of the shreds of paper are achieved by spinning in an air stream and/or by kneading.

4. Method according to one of claims 1 to 3, characterised in that the rough-pressed blanks have a diameter of 10 mm.

5. Method according to one of claims 1 to 4, characterised in that the further processing of the rough-pressed blanks to form the end product is effected by means of a matrix, the hole size of which is between 1 and 10 mm, preferably between 3 and 6 mm.

6. Method according to one of claims 1 to 5, characterised in that additives are added to the shreds of paper, the rough-pressed blanks or the pellets.

7. Method according to one of claims 1 to 6, characterised in that the granulated material or the small blocks or pellets are provided with a coating containing additives, which alter the properties of the pellets.

8. Method according to one of claims 1 to 7, characterised in that additives, which lower the specific density, such as, for example, porous fillers, styropore or polyurethane foam in various forms, small glass beads, wood or substances which alter the magnetic or elecrostatic properties of the paper fibres, are added so that the product can be used as an oil binding agent.

9. Method according to one of claims 1 to 8, characterised in that
- aromatic substances, such as natural and synthetic essences, perfume oils,
- odour-preventing additives, such as chlorophyll, active carbon, zinc, ricinoleates, enzymes,
- disinfectants, such as reducing or oxidising compounds, cationic surfactants, ampho-surfactants, alcohols,
- substances which influence the wettability of the paper fibres, i.e. anionic and non-ionic surfactants, polymers or oligomers, or
- bentonite, chalk,
are used as additives in order to increase and/or beautify the surface.

10. Method according to one of claims 1 to 9, characterised in that the rough pressing of the crushed and interlocked shreds of paper is effected in a flat-bed press.

11. Method according to claims 1 to 10, characterised in that the preliminary pressing of the rough-pressed blanks to form pellets is effected in an annular matrix press.

12. Method according to claim 11, characterised in that the production is effected by adding a small quantity of water of from 0 to 20 % relative to the basic composition.

13. Straw for animals produced in accordance with the method according to one of claims 1 to 12.

14. Oil binding agent produced in accordance with the method according to one of claims 1 to 8 and 10 to 12.

## Revendications

1. Procédé de fabrication de granulés, bûchettes ou pastilles absorbants, en papier, caractérisé par les opérations suivantes de procédé :
a) fractionnement mécanique du papier en morceaux de forme irrégulière ou en forme de bandes,
b) chiffonnage des rognures de papier, pour former des cavités, et mélange intime des rognures de papier chiffonnées,
c) compression à effet de tassement, sous forme d'éléments précomprimés, des rognures de papier chiffonnées et accrochées entre elles du fait du mélange intime,
d) compression, ou fractionnement, des éléments précomprimés pour former des granulés, bûchettes ou pastilles.

2. Procédé suivant la revendication 1, caractérisé en ce que le papier est découpé au moyen de lames.

3. Procédé suivant l'une des revendications 1 et 2, caractérisé en ce que le chiffonnement des rognures de papier et l'accrochage de ces dernières entre elles sont obtenus par soumission à un mouvement tourbillonnaire dans un courant d'air et/ou par pétrissage.

4. Procédé suivant l'une des revendications 1 à 3, caractérisé en ce que les éléments précomprimés ont un diamètre de 10 mm.

5. Procédé suivant l'une des revendications 1 à 4, caractérisé en ce que le traitement ultérieur des éléments précomprimés destiné à former le produit final s'obtient au moyen d'une matrice dont la dimension des trous est comprise entre 1 et 10 mm, de préférence entre 3 et 6 mm.

6. Procédé suivant l'une des revendications 1 à 5, caractérisé en ce que des additifs sont ajoutés aux rognures de papier, aux éléments précomprimés ou aux pastilles.

7. Procédé suivant l'une des revendications 1 à 6, caractérisé en ce que les granulés, bûchettes ou pastilles sont pourvus d'un revêtement qui contient des additifs modifiant les propriétés des pastilles.

8. Procédé suivant l'une des revendications 1 à 7, caractérisé en ce que, pour l'utilisation du produit en tant qu'absorbant pour huiles, on ajoute des additifs qui abaissent la densité spécifique, tels que par exemple charges poreuses, mousse de polystyrène ou de polyuréthanne sous diverses formes, microperles de verre, bois ou substances qui modifient les propriétés magnétiques ou électrostatiques des fibres du papier.

9. Procédé suivant l'une des revendications 1 à 8, caractérisé en ce que, comme additifs, on utilise :
- substances odorantes, telles qu'essences naturelles ou synthétiques, huiles essentielles,
- additifs désodorisants, tels que chlorophylle, charbon actif, zinc, ricinoléates, enzymes,
- agents désinfectants, tels que composés à action réductrice ou oxydante, agents tensio-actifs cationiques, agents tensio-actifs amphotères, alcools,
- substances influant sur la mouillabilité des fibres du papier, à savoir agents tensio-actifs anioniques et non-ioniques, polymères ou oligomères, ou
- bentonite, craie, servant à accroître et/ou protéger la surface.

10. Procédé suivant l'une des revendications 1 à 9, caractérisé en ce que la précompression des rognures de papier chiffonnées et accrochées entre elles s'effectue dans une presse à sommier plat.

11. Procédé suivant l'une des revendications 1 à 10, caractérisé en ce que la compression des éléments précomprimés en granulés s'effectue dans une presse à matrices annulaires.

12. Procédé suivant la revendication 11, caractérisé en ce que la fabrication s'effectue en ajoutant une faible quantité d'eau comprise entre 0 et 20 % par rapport à la masse de base.

13. Litière pour animaux fabriquée par le procédé conforme à l'une des revendications 1 à 12.

14. Absorbant pour huiles, fabriqué suivant le procédé conforme à l'une des revendications 1 à 8 et 10 à 12.
